# EUROPÄISCHE PATENTSCHRIFT

(11) **EP 1 458 604 B1**
(45) Veröffentlichungstag und Bekanntmachung des Hinweises auf die Patenterteilung: **06.08.2008**
(21) Anmeldenummer: 02799715.4
(22) Anmeldetag: 19.12.2002
(51) Int. Cl.: B62B 5/06

(54) **GRIFFSTANGE FÜR EINEN TRANSPORTWAGEN**
HANDLEBAR FOR A TROLLEY
BARRE DE MAINTIEN POUR UN CHARIOT DE TRANSPORT

(30) Priorität: 20.12.2001 DE 10163151; 17.01.2002 DE 10201525
(43) Veröffentlichungstag der Anmeldung: 22.09.2004
(73) Patentinhaber: Wieth, Franz, 82178 Puchheim (DE); Sonnendorfer, Horst, 82178 Puchheim (DE)
(72) Erfinder: Wieth, Franz, 82178 Puchheim (DE); Sonnendorfer, Horst, 82178 Puchheim (DE)
(86) Internationale Anmeldenummer: PCT/DE2002/004682
(87) Internationale Veröffentlichungsnummer: WO 2003/053761

(56) Entgegenhaltungen:
- EP-A- 0 672 572
- DE-A- 19 734 865
- DE-U- 29 803 007
- US-A- 5 692 761
- US-A- 5 788 252
- US-A- 5 915 704
- US-A- 6 065 189
- US-B1- 6 193 265

## Beschreibung

Die Erfindung betrifft eine Griffstange für einen Transportwagen, insbesondere für einen Einkaufswagen, wobei die Griffstange an Befestigungspunkten des Transportwagens montierbar ist. Eine Griffstange nach dem Oberbegriff von Anspruch 1 wird von der EP 0 672 572 A1 gezeigt.

Derartige Griffstangen dienen in erster Linie zur Übertragung von Zug und Schubkräften während des Bewegens des Transportwagens und als Halterung für Funktionselemente wie beispielsweise einem Pfandschloss oder einer Werbetafel.

Aus dem Stand der Technik sind gerade Griffstangen bekannt, die an ihren axialen Enden über Befestigungselemente mit dem Rahmen des Transportwagens verbunden sind. Diese Befestigungselemente werden in Fachkreisen "Griffkappen" genannt.

Die Transportwagen sind in bekannter Weise mit einem Korb ausgestattet und ineinander einschiebbar. Derartige Transportwagen beanspruchen im ineinander eingeschobenen Zustand weniger Grundfläche als wenn sie alle einzeln stehen. Bei den nachfolgenden Erläuterungen ist mit der vorderen Seitenwand die der Griffstange gegenüberliegende vordere Seitenwand des am Transportwagen befestigten Korbes definiert. Die hintere Seitenwand befindet sich an der Seite des Transportwagens, an der die Griffstange montiert ist. Diese hintere Seitenwand ist um eine nahe der Griffstange angeordnete Schwenkachse schwenkbar und wird in Fachkreisen Korbklappe genannt. Beim Einschieben eines zweiten Transportwagens in einen ersten Transportwagen drückt die vordere Seitenwand des zweiten Transportwagens gegen die Korbklappe des ersten Transportwagens. Nach dem Einschieben befindet sich die Korbklappe des ersten Transportwagens in einer im wesentlichen waagrechten Lage.

Beim Einschieben eines dritten Transportwagens in den zweiten Transportwagen klappt nun die Korbklappe des zweiten Transportwagens wie oben beschrieben ebenfalls in eine im wesentlichen waagrechte Lage.

Der vertikale Abstand der Griffstange des ersten Transportwagens von der Korbklappe des zweiten Transportwagens entspricht nun im wesentlichen der Differenz der jeweiligen vertikalen Höhen der Schwenkachse und dem unteren Rand der Griffstange bezogen jeweils auf die Ebene, auf welcher der Transportwagen steht.

Oftmals sind an der Korbklappe zusätzlich klappbare Sitze für Kleinkinder angebracht, die bei waagrecht geklappter hinterer Seitenwand den freien Raum unterhalb der Griffstange noch weiter verringern.

Wenn unterhalb der Griffstange Funktionselemente angebracht werden sollen, so muß deren Bauhöhe kleiner sein, als der bei waagrecht stehender Korbklappe verbleibende freie Raum.

Wenn bei einer geraden Griffstange nachträglich Funktionselemente angebracht werden sollen ergibt sich oft das Problem, dass der Freiraum unterhalb Griffstange nicht ausreicht, um Funktionselemente dort unterzubringen.

Aus dem in der DE 195 41 257 A1 enthaltenen Stand der Technik ist es nun bekannt, durch den Einsatz von speziellen Griffkappen die Griffstange erhöht am Transportwagen zu befestigen, um so den für die Funktionselemente benötigten freien Raum zwischen der Griffstange und der waagrecht geklappten Korbklappe zu schaffen.

Dies hat jedoch nachteilig zur Folge, dass die erhöht angeordnete Griffstange beim Be- und Entladen des Transportwagens als hinderlich empfunden wird.

Wenngleich auf die Griffstange in normalem Betrieb keine großen Kräfte einwirken, hat sich dennoch gezeigt, dass die Griffstangen sehr stabil ausgeführt sein müssen, denn insbesondere bei langen Wartezeiten, etwa an Kassen, neigen die Benutzer dazu, sich auf der Griffstange abzustützen.

Die Griffstange muss daher eine Stabilität aufweisen, die ausreicht, um diese Belastung durch das Körpergewicht des Benutzers ohne nennenswerte Verformung aufzunehmen.

Bei den bekannten geraden Griffstangen erzeugt die beim Abstützen auftretende Kraft ein Biegemoment, welches es erforderlich macht, die Griffstange vergleichsweise sehr massiv auszugestalten. Dies zwingt in nachteiliger Weise zu einem Einsatz von zusätzlichem Material.

Der Erfindung liegt nun die Aufgabe zugrunde, eine Griffstange für einen Transportwagen zu schaffen, bei welcher unterhalb der Griffstange ausreichend Platz zur Aufnahme von Funktionselementen vorhanden ist, ohne dass das Be-und Entladen des Transportwagens durch eine hohe Griffstange behindert wird, wobei die Funktionselemente einfach und dennoch sicher an der Griffstange befestigbar sind und die Griffstange bei geringem Materialaufwand eine ausreichende Stabilität aufweist.

Diese Aufgabe wird durch eine Griffstange gemäß Anspruch 1 gelöst. gelöst.

Die Überlegungen, welche zum Entstehen der vorliegenden Erfindung führten, gingen zum einen davon aus, dass bei einer gebogenen Griffstange die beim Abstützen wirkenden Kräfte vorteilhafter verteilt werden als bei einer geraden Griffstange und gleichzeitig der gebogene Verlauf der Griffstange einen Raum schafft, in welchem Funktionselemente ungestört untergebracht werden können.

Bei einer gebogenen Griffstange erzeugt die "Abstützkraft" überwiegend Schubkräfte entlang der Griffstange und nur ein vergleichsweise kleines Biegemoment quer zur Griffstange. Die Schubkräfte werden über die Befestigungspunkte des Griffes am Transportwagen von der soliden Konstruktion des Transportwagens aufgenommen.

Bei einer geraden Griffstange, wie aus dem Stand der Technik bekannt, erzeugt die "Abstützkraft" hingegen hauptsächlich ein Biegemoment quer zur Griffstange. Dieses Biegemoment kann nicht durch die Konstruktion des Transportwagens aufgenommen werden, die gerade Griffstange neigt eher zur Verformung.

Die gewölbte Griffstange reagiert daher auf eine vom Kunden erzeugte Abstützkraft wesentlich stabiler als eine gerade Griffstange. Hierdurch ist es vorteilhaft möglich, die Materialstärke der gewölbten Griffstange zu verringern, ohne dass der Griff an Stabilität verliert.

Ein gewölbter Griff kann bei vergleichbarer Stabilität gegenüber den genannten Abstützkräften mit geringerem Materialaufwand und daher mit geringerem Gewicht hergestellt werden. Insbesondere kann der Griff vollständig aus Kunstoff hergestellt sein. Ein Metallrohr zur Versteifung wie es bei geraden Griffstangen im Stand der Technik oftmals eingesetzt wird, ist nicht mehr notwendig.

Dies ermöglicht vorteilhaft und kostengünstig die Verwendung eines Griffes aus einem extrudierten Profil oder aus einem entsprechend profilierten Spritzteil. Dadurch ist der Griff leichter und die Herstellung vereinfacht sich erheblich.

Eine weitere Überlegung, die zum Gegenstand der Erfindung führte betrifft das Anbringen von zusätzlichen Funktionselementen wie beispielsweise Pfandschlössern.

Der nach oben gewölbte Verlauf der Griffstange bringt mit sich, dass zwischen der Griffstange und der Linie, die dem Verlauf einer bekannten, geraden Griffstange entspricht ein Freiraum entsteht, der zur Aufnahme von zusätzlichen Funktionselementen geeignet ist.

Dies ermöglicht es vorteilhaft, dass an der Unterseite der Griffstange eine Funktionseinheit , beispielsweise ein Pfandschloß oder eine Werbefläche angebracht sein kann, ohne dass die Funktionseinheit mit der waagrecht geklappten hinteren Seitenwand in Kontakt kommt.

Dies ist besonders dann von Vorteil, wenn ein Einkaufswagen nachträglich mit einem Pfandschloß versehen werden soll, ohne daß die Schwenkbewegung der Korbklappe behindert ist. So kann die erfindungsgemäße Griffstange ohne weitere Maßnahmen anstelle einer geraden Griffstange auch noch nachträglich an vorhandene Transportwagen montiert werden. In vorteilhafter Weise erübrigt sich bei einer Nachrüstung auch der Einsatz einer abgeänderten Griffkappe wie aus der DE 195 41 257 A1 bekannt.

Die erfindungsgemäße Griffstange ist nicht über die gesamte Breite erhöht, die Endabschnitte der Griffstange befinden sich auf der vom Benutzer gewohnten Höhe, wodurch das Be- oder Entladen des Transportwagens nicht behindert wird.

Diese Gestaltung hat außerdem den Vorteil, daß die Endabschnitte, an denen die Griffstange bei der Benutzung im Schiebebetrieb normalerweise angefaßt wird, durch die Wölbung der Griffstange zur Mitte hin leicht schräg nach oben weisen, so daß sich für den Benutzer eine ergonomische Handhaltung ergibt, die angenehmer empfunden wird, als bei Wagen mit geraden, waagrechten Griffstangen. Der höchste Punkt des Griffes liegt etwa in der Mitte zwischen den Tragarmen, die Endabschnitte, an denen der Griff angefaßt wird liegen jedoch weiterhin in der vom Benutzer gewohnten Höhe.

Erfindungsgemäß erlaubt die gebogene Form der Griffstangen den Einsatz von Profilmaterial und dies läßt sich vorteilhaft weiter kombinieren mit dem Einsatz von Führungsnuten zum formschlüssigen Befestigen der Funktionselemente.

Weitere vorteilhafte Ausgestaltungen der Erfindung ergeben sich aus den Unteransprüchen.

Die Erfindung ist nachfolgend anhand einer bevorzugten Ausführungsform beschrieben. Dabei ist Bezug genommen auf die beigefügten Zeichnungen. In den Zeichnungen zeigt:
Figur 1 einen Einkaufswagen mit der erfindungsgemäßen Griffstange gemäß einer ersten Ausführungsform der Erfindung in Heckansicht,;
Figur 2 eine Seitenansicht des Einkaufswagens aus Fig. 1;
Figur 3 einen Einkaufswagen mit einer weiteren Ausführungsform der erfindungsgemäßen Griffstange in Heckansicht,
Figur 4 eine Detailansicht der Befestigung einer Funktionseinheit an der Griffstange.

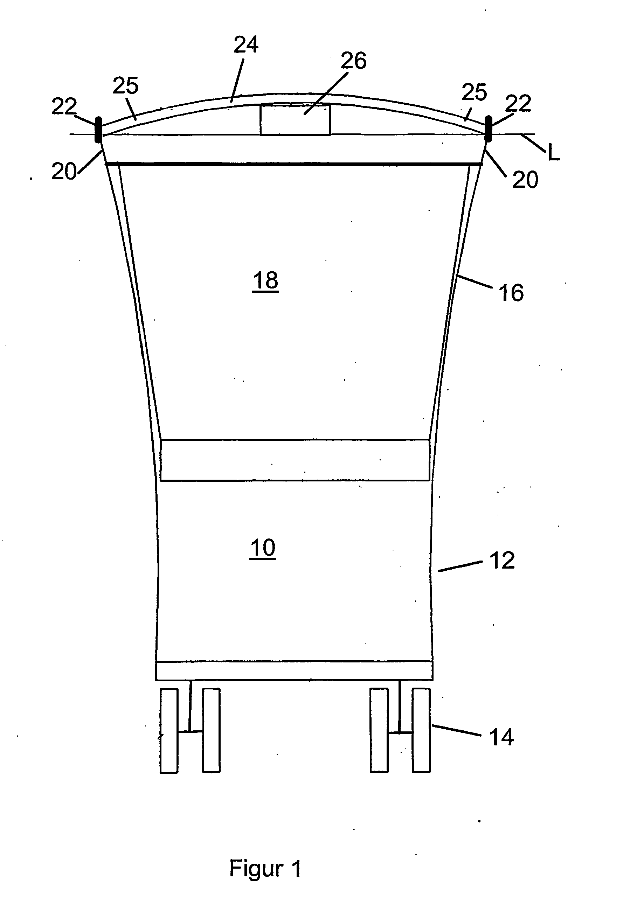

In Fig. 1 ist ein erfindungsgemäßer Transportwagen 10 zu sehen, mit einem Rahmen 12, der auf Rollen 14 fahrbar ist. Der Rahmen 12 weist zwei im wesentlichen senkrechte Holme 16 auf, an denen in bekannter Weise ein Korb 18 befestigt ist. Die freien Enden der Holme 16 bilden Grifftragarme 20. An den Grifftragarmen 20 befinden sich Griffkappen 22. Über die Griffkappen 22 ist die Griffstange 24 mit dem Transportwagen 10 verbunden.

An der Griffstange 24 ist ein Funktionselement 26 befestigt.

Das Funktionselement 26 ist beispielsweise geeignet zur Aufnahme eines Pfandschlosses oder eines Werbeträgers.

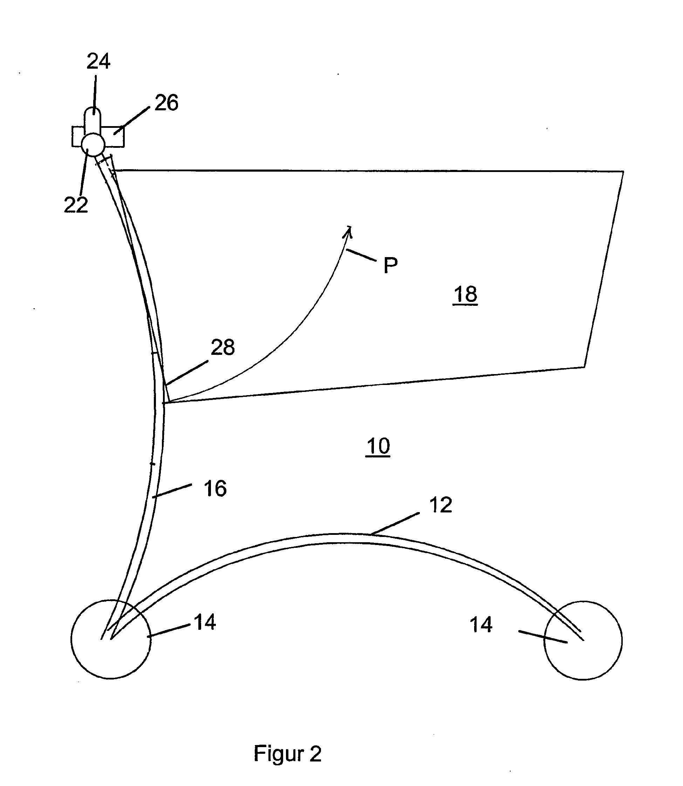

Die hintere Seitenwand 28 des Korbes 18 ist um die Achse S schwenkbar gelagert. Dies wird später anhand der Figur 2 noch genauer erläutert.

Die Griffstange 24 ist gewölbt, und zwar so, daß die Unterseite der Griffstange 24 die Innenseite der Wölbung bildet und die Wölbung nach oben weist. Das Funktionselement 26 ist mittig an der Unterseite an der Griffstange 24 befestigt.

Die Unterseite des Funktionselements 26 reicht bis zu der Linie L. Die Linie L entspricht in dieser Darstellung der Unterkante eines konventionellen geragen Griffrohres. Diese Geometrie ist desshalb gewählt, weil hierdurch insbesondere bei einer Umrüstung eines bestehenden Transportwagens mit gerader Griffstange ohne Funktionsmodul zu einem Transportwagen mit Funktionsmodul sichergestellt ist, dass das Funktionsmodul in jedem Zustand des Transportwagens - insbesondere, wenn sich der Transportwagen zusammen mit anderen Transportwagen in einem Stapel befindet - keinen störenden Kontakt zu anderen Teilen des Transportwagens hat.

Ebenso ist es möglich das Funktionselement 26 etwas ausserhalb der Mitte der Griffstange 24 anzuordnen, sofern das Funktionselement 26 innerhalb des durch die Linie L begrenzten Bereichs bleibt.

Weiter ist zu sehen, daß von den Griffkappen 22 ausgehend die Endabschnitte 25 der Griffstange 24 zur Mitte hin leicht schräg verlaufen. Dadurch ergibt sich für den Benutzer beim Schieben des Einkaufswagens 10 eine ergonometrisch angenehme Handhaltung, welche etwa einer natürlichen, entspannten Handhaltung bei leicht angewinkelten Armen entspricht.

Die Figur 2 zeigt den aus Figur 1 bekannten Transportwagen in Seitenansicht.

Der Korb 18 ist an der zur Griffstange 24 weisenden Seite durch eine um die Achse S schwenkbare Korbklappe 28 abgegrenzt. Beim Ineinanderstapeln der Einkaufswagen 10 wird die Korbklappe um diese Achse S in Richtung des Pfeiles P geschwenkt. Es ist deutlich sichtbar, dass das Funktionselement 26 immer ausreichenden Abstand von der sich schwenkenden Korbklappe 28 hat.

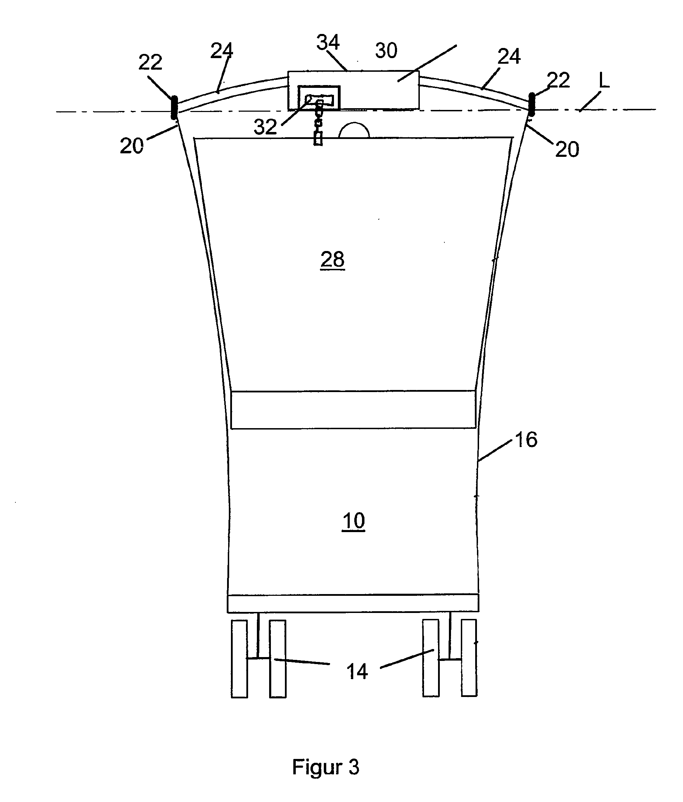

Die Figur 3 zeigt in Heckansicht eine weitere mögliche Ausführung der erfindungsgemäßen Griffstange 24.

Im Gegensatz zu dem in den anderen Figuren dargestellten Funktionselement 26 befindet sich das hier gezeigte Funktionselement 30 sowohl unterhalb als auch oberhalb der Griffstange 24.

Die Griffstange 24 kann bei dieser Ausführung einteilig oder mehrteilig ausgeführt sein, Bei einer mehrteiligen Griffstange 24 reicht je ein Teil der Griffstange 24 vom Tragarm 20 bis zu dem mittig angeordneten Funktionselement 30. Am Funktionselement 30 ist eine Befestigung für die Teile 24a, 24b der Griffstange 24 vorgesehen. Das Funktionselement 30 stellt einen Teil der bogenförmigen Griffstangen- Konstruktion dar.

Bei einer einteiligen Griffstange ist es möglich im Funktionselement 30 einen Kanal vorzusehen, durch welchen eine durchgehende Griffstange 24 geschoben wird. Auch ist es möglich, das Funktionselement zweiteilig zu gestalten. Die beiden Teile des Funktionselements 30 können dann an einen geteilten Kanal aufweisen und werden erst nachdem sie um die Griffstange 24 gelegt worden sind miteinander fest verbunden. Durch einen gekrümmten Verlauf des Kanals und/oder durch aufeinander abgestimmte Profile der Griffstange 24 und des erreicht man eine auf Formschluss basierende Verdrehsicherheit des Funktionselements 30 gegenüber derGriffstange 24.

Bei dieser Ausführung ist es beispielsweise möglich, den oberhalb der Griffstange befindlichen Teil des Funktionselement 30 als Werbeträger 34 zu verwenden und den unterhalb der Griffstange liegenden zur Aufnahme eines Pfandschlosses 32 zu verwenden.

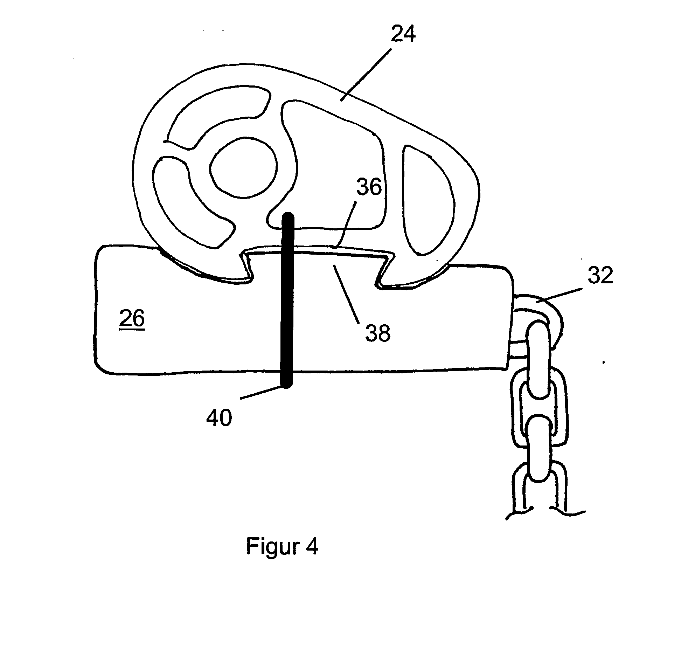

Die Figur 4 zeigt in Schnittdarstellung eine mögliche Art das Funktionselement 30 formschlüssig an der Griffstange 24 zu befestigen.

Das Profil der Griffstange 24 weist an der Unterseite eine hinterschnittene Nut 36 auf. Das Funktionselement 26 seinerseits hat an seiner Oberseite einen Steg 38. Der Steg 38 ist seitlich in die Nut 36 einschiebbar und sitzt dann formschlüssig in der Nut 36. Durch zusätzliche Befestigungselemente beispielsweise einen Stift 40 ist im fertig montierten Zustand das Funktionselement 26 gegen ein Verschieben entlang der Nut 36 gesichert.

Die beschriebenen Ausführungsformen stellen durch die kreisförmig gebogene Griffstange einen Griff dar, der bei geringem Gewicht und Materialaufwand für eine gute Verteilung einer vertikalen Belastung in Griffmitte sorgt und gleichzeitig unter dem Griff Platz für ein Funktionselement bietet.

Es sind jedoch auch Varianten denkbar, bei denen der Griff keinen Kreisbogen bildet, sondern abschnittsweise mit unterschiedlichen Radien gebogen ist. Beispielsweise könnte der mittlere Abschnitt weniger stark gebogen sein, um daran einen Werbeclip befestigen zu können. Es wäre auch möglich, bestimmte Abschnitte der Griffstange, z.B. die zum Anfassen gedachten Abschnitte, gerade auszuführen. Entscheidend für den erfindungsgemäßen Erfolg ist es eine beliebig geartete Konstruktion zu schaffen, die insbesonders die Abstützkräfte in Schubkräfte innerhalb der Konstruktion umzuwandeln und gleichzeitig Raum zum Anbringen des Funktionselements bietet.

Ebenso ist es auch möglich, dass die Griffstange nicht nur bezüglich der Fahrtebene, sondern auch bezüglich der Fahrtrichtung des Transportwagens gebogen ist.

## Patentansprüche

1. Griffstange für einen Transportwagen, wobei
die Griffstange an Befestigungspunkten des Transportwagens montierbar ist, die Griffstange einen gebogenen Verlauf aufweist und
die in Richtung zur Standfläche des Transportwagens zeigende Seite der Griffstange die Innenseite der Biegung ist
**dadurch gekennzeichnet, dass**
ein an der Griffstange (24) angebrachtes Funktionselement (26; 30) im wesentlichen unterhalb der Griffstange (24) und oberhalb der zwischen den Befestigungspunkten (22) verlaufenden Linie (L) angebracht ist.

2. Griffstange nach Anspruch 1,
**dadurch gekennzeichnet, dass**
die Griffstange (24) als extrudiertes Profil ausgebildet ist.

3. Griffstange nach einem der vorangegangenen Ansprüche
**dadurch gekennzeichnet, dass**
die Verbindung zwischen Griffstange (24) und Funktionselement (26, 30) formschlüssig ausgebildet ist.

4. Griffstange nach einem der vorangegangenen Ansprüche,
**dadurch gekennzeichnet, dass**
in der Griffstange (24) eine Nut (36) vorgesehen ist, in welche ein am Funktionselement (26) vorhandener Steg (38) einschiebbar ist.

5. Griffstange nach einem der vorangegangenen Ansprüche,
**dadurch gekennzeichnet, dass**
das Funktionselement (26) ein Pfandschloss und/oder eine Werbefläche ist.

## Claims

1. Handlebar for a transport trolley, it being possible for the handlebar to be mounted on fastening points of the transport trolley, the handlebar having a bent profile and that side of the handlebar which points in the direction of the base surface of the transport trolley being the inner side of the curvature, **characterized in that** a functional element (26; 30) which is attached to the handlebar (24) is attached substantially below the handlebar (24) and above the line (L) which runs between the fastening points (22).

2. Handlebar according to Claim 1, **characterized in that** the handlebar (24) is configured as an extruded profile.

3. Handlebar according to one of the preceding claims, **characterized in that** the connection between the handlebar (24) and the functional element (26, 30) is of positively locking configuration.

4. Handlebar according to one of the preceding claims, **characterized in that** a groove (36) is provided in the handlebar (24), into which groove (36) a web (38) can be pushed which is present on the functional element (26).

5. Handlebar according to one of the preceding claims, **characterised in that** the functional element (26) is a deposit-payment lock and/or an advertising area.

## Revendications

1. Barre de maintien pour un chariot de transport, dans laquelle la barre de maintien peut être montée en des points de fixation du chariot de transport, la barre de maintien présente un tracé courbe et le côté de la barre de transport tourné vers la surface de roulement du chariot de transport est la face interne de la courbure, **caractérisée en ce qu'**un élément fonctionnel (26; 30) monté sur la barre de maintien (24) est monté essentiellement en dessous de la barre de maintien (24) et au-dessus de la ligne (L) tracée entre les points de fixation (22).

2. Barre de maintien selon la revendication 1, **caractérisée en ce que** la barre de maintien (24) est formée par un profilé extrudé.

3. Barre de maintien selon l'une quelconque des revendications précédentes, **caractérisée en ce que** la jonction entre la barre de maintien (24) et l'élément fonctionnel (26; 30) est formée par complémentarité de forme.

4. Barre de maintien selon l'une quelconque des revendications précédentes, **caractérisée en ce qu'**il est prévu dans la barre de maintien (24) une rainure (36), dans laquelle une nervure (38) formée sur l'élément fonctionnel (26) peut être insérée.

5. Barre de maintien selon l'une quelconque des revendications précédentes, **caractérisée en ce que** l'élément fonctionnel (26) est un verrou monnayeur et/ou une surface publicitaire.
